# EUROPÄISCHE PATENTSCHRIFT

(11) **EP 0 823 774 B1**
(45) Veröffentlichungstag und Bekanntmachung des Hinweises auf die Patenterteilung: **24.10.2001**
(21) Anmeldenummer: 97111162.0
(22) Anmeldetag: 03.07.1997
(51) Int. Cl.: H02P 5/41, H02P 7/63, H02M 7/527

(54) **Frequenzumrichter zum Betrieb eines Asynchron-Drehstrommotors**
Frequency converter for operating an asynchronous three-phase motor
Convertisseur de fréquence pour opération d'un moteur asynchrone triphasé

(30) Priorität: 12.07.1996 DE 19628148
(43) Veröffentlichungstag der Anmeldung: 11.02.1998
(73) Patentinhaber: FHP Motors GmbH, 26133 Oldenburg (DE)
(72) Erfinder: Willers, Frank, 26125 Oldenburg (DE)
(74) Vertreter: Jabbusch, Wolfgang, Dr.Jur.

(56) Entgegenhaltungen:
- EP-A- 0 627 809
- DE-A- 4 101 341
- DE-A- 4 102 893
- DE-A- 4 110 225

## Beschreibung

Die Erfindung betrifft einen Frequenzumrichter zum Betrieb eines Asynchron-Drehstrommotors der im Oberbegriff des Patentanspruchs 1 angegebenen Art.

Umrichter für Betriebsspannung und Betriebsfrequenzen sind beispielsweise zum Betrieb von Drehstrommotoren mit variabler Drehzahl erforderlich. Der Aufbau eines solchen Umrichters besteht meist aus einer Gleichrichtung der Netzwerkspannung, einem Gleichspannungszwischenkreis, der z. B. aus einem Kondensator zur Zwischenspeicherung der Energie besteht, und einem Wechselrichter, z. B. einer Steuereinrichtung zur Erzeugung der gewünschten Steuerimpulse für eine dreiphasige Leistungsbrücke und aus eben dieser Leistungbrücke.

Durch die DE 41 10 225 A1 sind ein Steuerverfahren und eine Steueranordnung für einen Wechselrichter bekannt, der wechselpannungsseitig mit einer Induktionsmaschine verbunden ist und dessen Schaltzustand von einer Steuer- und Regelungseinrichtung einstellbar ist. Hierbei wird die drehmomentbildende Sollwertkomponente in Abhängigkeit der Spannungswelligkeit der Gleichspannungszwischenkreisspannung verändert. Dieser Stand der Technik erfordert ein aufwendiges Steuerverfahren.

Weiterhin offenbart die DE 41 01 341 A1 einen Frequenzumrichter für einen Asynchron- Drehstrommotor, bei dem eine Steuerelektronik, insbesondere ein Mikrocomputer die Betriebsfrequenz und die Betriebsspannung des Motors je nach der Solldrehzahl einstellt. Weicht hierbei die Istdrehzahl von der Solldrehzahl ab, dann regelt der Microcomputer über eine Impulsbreitensteuerung, Treiber und Leistungstransistoren die Betriebsspannung so nach, daß die Istdrehzahl gleich der Solldrehzahl ist. Für diese Drehzahlregelung ist zusätzlich ein Tachogenerator erforderlich, wodurch der Frequenzumrichter verteuert wird.

Der Erfindung liegt die Aufgabe zugrunde, einen Frequenzumrichter zum Betrieb eines Asynchron-Drehstrommotors zu schaffen, der sich durch einen einfachen und kostengünstigen Aufbau auszeichnet und für eine billige Massenfertigung geeignet ist. Diese Aufgabe wird durch die im Patentanspruch 1 gekennzeichneten Merkmale gelöst.

Der Frequenzumrichter für einen Asynchron-Drehstrommotor zeichnet sich durch einfache und billige Einzelteile aus, wobei auf den Einsatz eines kostenintensiven Mikroprozessors verzichtet wird. Daher findet dieser Umrichter zum Antrieb von Asynchron-Drehstrommotoren in Pumpen, Gebläsen, insbesondere in Gasgebläsebrennern besondere Verwendung.

Weitere vorteilhafte Ausgestaltungen des Erfindungsgegenstandes sind den weiteren Unteransprüchen zu entnehmen.

Die Erfindung wird anhand eines Ausführungsbeispieles im Folgenden näher beschrieben. Es zeigen:
- Figur 1: ein Blockschaltbild eines Asynchron-Drehstrommotors mit einem Frequenzumrichter und

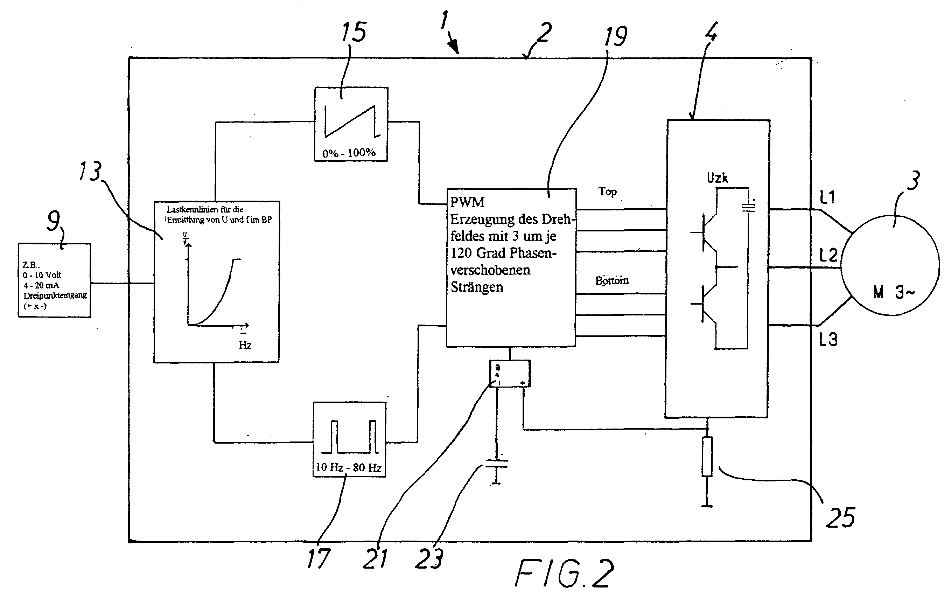

- Figur 2: Einzelheiten des Frequenzumrichters

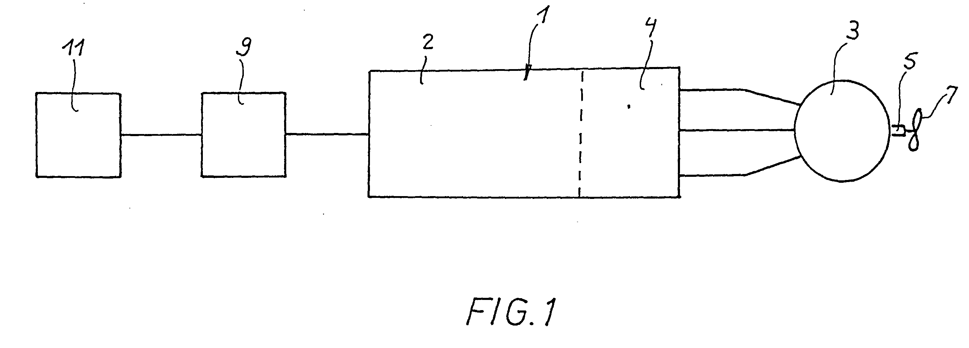

Die Figur 1 zeigt ein Blockschaltbild eines Frequenzumrichters 1 mit einem Steuerteil 2 und einem Leistungsteil 4 zum Betrieb eines Asynchron-Drehstrommotors 3, dessen Drehwelle 5 mit einem Lüfterrad 7 z. B. für einen Einsatz in einem Gasgebläsebrenner verbunden ist. Der Frequenzumrichter 1 erhält Eingangssignale von einem Eingangsanpassungsglied 9, durch welches Sollwerte ohne Rückkopplung vorgegeben werden. Dieses Eingangsanpassungsglied 9 erhält die Sollwerte z. B. von einem Steuerglied 11 einer nicht näher dargestellten Kesselsteuerung. Die Sollwerte können hierbei Werte für die Spannung zwischen 0V - 10V oder für den Strom zwischen 4 - 20mA einnehmen, wobei die Drehzahl n = 0 z.B. einem Spannungswert von 0V oder einem Stromwert von 4mA und n = n max einem Spannungswert von 10V bzw. 20 mA entsprechen. Diese Sollwerte werden z. B. von der Kesselsteuerung vorgegeben und über das Eingangsanpassungsglied 9 einem Kennlinienanpassungsglied 13 zugeleitet. Dieses Kennlinienanpassungsglied 13 enthält eine gespeicherte Kennlinie für die Ermittlung von Steuerspannungen auf, welche dann als Eingangssignale an einem Pulsweitenmodulationsglied 15 und an einem Takterzeugungsglied 17 anliegen. Die Kennlinie in dem Kennlinienanpassungsglied 13 ist eine Frequenz-Spannungs-Kennlinie und hat z. B. eine Parabelform, wobei die Frequenz f der Spannung U zum Quadrat proportional ist, F∼U². Das Takterzeugungsglied 17 erzeugt je nach der ermittelten Steuerspannung Taktsignale z. B. zwischen 10 bis 80 Hz, welche an ein Steuerglied 19 zur Auswertung weiter geleitet werden. Ebenfalls erhält das Steuerglied 19 Ausgangssignale von dem Pulsweitenmodulationsglied 15, wobei die Pulsweite je nach der ermittelten Steuerspannung zwischen 10% bis 100% liegt.

Im Rahmen der Erfindung kann die Frequenz-Spannungs-Kennlinie auch linear verlaufen, d. h. F∼U. Wesentlich ist, daß die Frequenz-Spannungs-Kennlinie an die Anwendung in der Antriebsordnung angepaßt wird.

Das Steuerglied 19 wertet die pulsweitenmodulierten Ausgangsignale aus und schaltet die einzelnen Leistungshalbleiterventile in dem Leistungsteil 4. Das Leistungsteil 4 kann z. B. aus drei Halbleiterbrücken bestehen. Der Frequenzumrichter steuert die Motorspannung entsprechend der gewünschten Drehzahl des Drehstrommotors 3, wobei ein rechteckförmiges Drehfeld mit drei je um 120 Grad phasenverschobenen Strängen erzeugt wird und der Drehstrommotor 3 mit einem möglichst hohen Wirkungsgrad arbeitet.

Das Steuerglied 19 besteht aus einem programmierten Logikbaustein, inbesondere aus einem GAL-Baustein.

An dem Steuerglied 19 liegt ein Ausgangssignal eines Überstromkomparators 21 an, welcher ausgangsseitig mit einem Kondensator 23 und einem Meßwiderstand 25 verbunden ist.

Der erfindungsgemäße Frequenzumschalter 1 zum Betrieb eines Asynchronmotors hat einen einfachen und kostengünstigen Aufbau, da auf den Einsatz eines Mikroprozessors und auf eine Anzeige der Parameter verzichtet wird.

## Patentansprüche

1. Frequenzumrichter zum Betrieb eines AsynchronDrehstrommotors mit angeschlossener Last, wobei ein Steuerglied pulsweitenmodulierte Signale auswertet und den einzelnen Leistungshalbleiterventilen des Umrichters zuführt,
**dadurch gekennzeichnet,**
**daß** an ein Kennlinienanpassungsglied (13) ein der Sollwertvorgabe ohne Rückkopplung entsprechendes Signal gelegt ist,
**daß** das Kennlinienanpassungsglied (13) eine gespeicherte Lastkennlinie mit Speicherwerten für die Ermittlung von Steuerspannungen aufweist, welche als Eingangssignale an einem Pulsweitenmodulationsglied (15) und an einem Takterzeugungsglied (17) anliegen, und
**daß** an dem Steuerglied (19) die Ausgangssignale des Takterzeugungsgliedes (17) zur Einstellung der Betriebsfrequenz und die Ausgangssignale des Pulsweitenmodulationsgliedes (15) zur Einstellung der Betriebsspannung anliegen.

2. Frequenzumrichter nach Anspruch 1, **dadurch gekennzeichnet, daß** die Lastkennlinie eine Frequenz-Spannungs-Kennlinie ist.

3. Frequenzumrichter nach Anspruch 2, **dadurch gekennzeichnet, daß** die Frequenz-Spannungs-Kennlinie an die Anwendung in der Antriebsordnung angepaßt ist.

4. Frequenzumrichter nach Anspruch 3, **dadurch gekennzeichnet, daß** die Frequenz-Spannungs-Kennlinie eine Parabelform, z.B. F~U², aufweist.

5. Frequenzumrichter nach Anspruch 3, **dadurch gekennzeichnet, daß** die Frequenz-Spannungs-Kennlinie linear, d.h. F∼U verläuft.

6. Frequenzumrichter nach Anspruch 1, **dadurch gekennzeichnet, daß** das Steuerglied (19) ein programmierter Logikbaustein ist.

7. Frequenzumrichter nach Anspruch 6, **dadurch gekennzeichnet, daß** der Logikbaustein ein GAL-Baustein ist.

8. Frequenzumrichter nach einem der vorhergehenden Ansprüche, **dadurch gekennzeichnet, daß** an dem Steuerglied (19) ein Ausgangssignal eines Überstromkomparators (21) anliegt, welcher eingangsseitig mit einem Kondensator (23) und einem Meßwiderstand (25) verbunden ist.

9. Frequenzumrichter nach einem der vorhergehenden Ansprüche, **dadurch gekennzeichnet, daß** die Anordnung zum Antrieb von Asynchron-Drehstrommotoren in Pumpen, Gebläsen, insbesondere in Öl- und Gasgebläsebrennern Verwendung findet.

## Claims

1. Frequency converter for running an asynchronous three-phase motor with connected load, a control element evaluating pulse-width modulated signals and feeding them to the individual power semiconductor gates of the converter,
**characterised in that**
a signal corresponding to the specified target value without feedback coupling is applied to a characteristic curve adapter element (13),
that the characteristic curve adapter element (13) has a stored load characteristic curve having stored values for the determination of control voltages which are applied as input signals to a pulse-width modulation element (15) and a clock generation element (17), and
that the output signals from the clock generation element (17) for adjusting the operating frequency and the output signals from the pulse-width modulation element (15) for adjusting the operating voltage are applied to the control element (19).

2. Frequency converter according to Claim 1, **characterised in that** the load characteristic curve is a frequency-voltage characteristic curve.

3. Frequency converter according to Claim 2, **characterised in that** the frequency-voltage characteristic curve is adapted in drive arrangement to the application.

4. Frequency converter according to Claim 3, **characterised in that** the frequency-voltage characteristic curve has the shape of a parabola, eg F-U².

5. Frequency converter according to Claim 3, **characterised in that** the frequency-voltage characteristic curve runs in a straight line, ie F-U.

6. Frequency converter according to Claim 1, **characterised in that** the control element (19) is a programmed logic module.

7. Frequency converter according to Claim 6, **characterised in that** the logic module is a GAL module.

8. Frequency converter according to one of the preceding claims, **characterised in that** applied to the control element (19) is an output signal of an overcurrent comparator (21) which is connected on the input side to a capacitor (23) and a precision resistance 25).

9. Frequency converter according to one of the preceding claims, **characterised in that** the arrangement for driving asynchronous three-phase motors is used in pumps, fans and in particular in oil and gas fan burners.

## Revendications

1. Convertisseur de fréquence pour le fonctionnement d'un moteur à courant alternatif asynchrone, à charge raccordée, un organe de commande exploitant des signaux à modulation d'impulsions en largeur et les amenant aux différentes valves à semi-conducteur de puissance du convertisseur,
**caractérisé en ce qu'**
un signal, correspondant à l'attribution de valeur de consigne, est appliqué, sans recouplage, à un organe d'adaptation de caractéristiques (13),
**en ce que** l'organe d'adaptation et de caractéristiques (13) présente une caractéristique de charge mémorisée, avec des valeurs mémoires pour la détermination de tensions de commande, appliquées à titre de signaux d'entrées à un organe de modulation d'impulsions en largeur (15) et à un organe de génération de cadence (17), et
**en ce qu'**à l'organe de commande (19) sont appliqués les signaux de sortie de l'organe de génération de cadence (17), pour régler la fréquence de fonctionnement, et les signaux de sortie de l'organe de modulation d'impulsions en largeur (15), pour régler la tension de fonctionnement.

2. Convertisseur de fréquence selon la revendication 1,
**caractérisé en ce que** la caractéristique de charge est une caractéristique fréquence-tension.

3. Convertisseur de fréquence selon la revendication 2,
**caractérisé en ce que** la caractéristique fréquence-tension est adaptée à l'utilisation dans l'agencement d'entraînement.

4. Convertisseur de fréquence selon la revendication 3,
**caractérisé en ce que** la caractéristique fréquence-tension présente une forme parabolique, par exemple répondant à la loi F-U².

5. Convertisseur de fréquence selon la revendication 3,
**caractérisé en ce que** la caractéristique fréquence-tension est linéaire, c'est-à-dire répond à une loi F-U.

6. Convertisseur de fréquence selon la revendication 1,
**caractérisé en ce que** l'organe de commande (19) est un composant logique programmé.

7. Convertisseur de fréquence selon la revendication 6,
**caractérisé en ce que** le composant logique est un composant GAL.

8. Convertisseur de fréquence selon l'une des revendications précédentes, **caractérisé en ce qu'**à l'organe de commande (19) est appliqué un signal de sortie venant d'un comparateur de surintensité (21) qui est relié, côté entrée, à un condensateur (23) et à une résistance de mesure (25).

9. Convertisseur de fréquence selon l'une des revendications précédentes, **caractérisé en ce que** l'agencement prévu pour l'entraînement des moteurs à courant alternatifs à synchrone est utilisé dans des pompes, des soufflantes, en particulier dans des brûleurs à fioul ou à gaz, à air soufflé.
